# EUROPEAN PATENT SPECIFICATION

(11) **EP 3 007 802 B1**
(45) Date of publication and mention of the grant of the patent: **10.06.2026**
(21) Application number: 14811017.4
(22) Date of filing: 13.06.2014
(51) Int. Cl.: B01D 53/14, B01D 53/34, B01D 53/62, B01D 53/74, B01D 53/96, B01J 20/04, B01J 20/34, C22B 21/00, C22C 33/00, B01D 53/12

(54) **METHOD FOR SUSTAINABLE ENERGY PRODUCTION IN A POWER PLANT COMPRISING A SOLID OXIDE FUEL CELL**
VERFAHREN FÜR NACHHALTIGE ENERGIEPRODUKTION IN EINEM KRAFTWERK MIT EINER FESTOXIDBRENNSTOFFZELLE
PROCÉDÉ DE PRODUCTION D'ÉNERGIE RENOUVELABLE DANS UNE CENTRALE ÉLECTRIQUE COMPRENANT UNE PILE À COMBUSTIBLE À OXYDE SOLIDE

(30) Priority: 14.06.2013 NO 20130832
(43) Date of publication of application: 20.04.2016
(73) Proprietor: ZEG Power AS, 0283 Oslo (NO)
(72) Inventor: VIK, Arild, 5258 Blomsterdalen (NO); RAAHEIM, Arne, 2932 Maura (NO)
(74) Representative: Acapo Onsagers AS
(86) International application number: PCT/NO2014/050100
(87) International publication number: WO 2014/200357

(56) References cited:
- EP-A1- 2 559 475
- WO-A1-01/42132
- WO-A1-01/42132
- WO-A1-2007/003954
- WO-A1-2011/031755
- WO-A1-2011/078681
- WO-A1-2012/070954
- WO-A2-2007/002882
- DEAN C C ET AL: "The calcium looping cycle for COcapture from power generation, cement manufacture and hydrogen production", CHEMICAL ENGINEERING RESEARCH AND DESIGN, ELSEVIER, AMSTERDAM, NL, vol. 89, no. 6, 7 October 2010 (2010-10-07), pages 836 - 855, XP028216225, ISSN: 0263-8762, [retrieved on 20101023], DOI: 10.1016/J.CHERD.2010.10.013

## Description

The present invention relates to a method for sustainable energy production as indicated by the preamble of claim 1.

### Background

International Energy Agency (IEA) has defined energy efficiency as one of the most important steps for reduction of greenhouse gases (GHG) (see IEA's Blue Map Scenario 2010). In addition, successful development and application of CCS (carbon capture and storage) in the power sector and a number of energy-intensive industrial sectors (e.g. iron and steel, aluminium, silicon, ferrosilicon, cement, etc.) potentially represent the most important option for direct large scalereduction of GHG emissions in power production and industry.

The publication WO 2004/025767 (Vik et al.) discloses a plant for production of electricity from a hydrocarbon-containing flow. According to one embodiment, a solid oxide fuel cell (SOFC) is used for producing the electricity. The process involves reforming of the fuel in order to produce hydrogen before separating it from the other components to use pure hydrogen as the feed to thefuel cell. CO₂ produced during reforming may be captured directly in the process by the lime (CaO)sorbent in a hydrogen production reactor. The solid calcium carbonate (CaCO₃) formed in this process is transferred to the sorbent regeneration reactor. The CO₂ formed in this process (see reaction II) may be stored or used in processes where CO₂ is needed. The process of Vik et al. is targeted towards applications where excess heat is not needed, and where high efficiency for the co-production of electricity and hydrogen is the primary object.

WO 01/42132 describes a process and facility for hydrogen production and optionally energy production utilizing a gasification unit. The gas leaving the gasification vessel is a methane rich fuel gas. CaO is added to this fuel gas and the resulting temperature increase is seen as a problem that has to be controlled by heat exchange to avoid an excessive temperature increase.

WO 2007/002882 4A2 describes a system of calcium looping for CO₂ capture purpose. A challenge in such a system is to avoid degeneration of the active capturing compound, CaO, when used and recycled several times, and the focus of WO 2007 /002882 A2 is to find a solution to this challenge.

Further, C.C. Dean et al. (in "The calcium looping cycle for CO2 capture from power generation, cement manufacture and hydrogen production" CHEMICAL ENGINEERING RESEARCH AND DESIGN, ELSEVIER, vol. 89, No. 6, pages 836-855, ISSN:0263-8762) discloses a calcium looping (CaL) cycle for CO₂ capture from power plants, cement manufacturing, and hydrogen production. This so-called second-generation carbon capture technology uses reversible reactions between calcium oxide (*CaO*) and calcium carbonate (*CaCO*₃) to capture *CO*₂ from flue gas, offering advantages like the use of cheap, abundant sorbents and potential synergies with cement production. The process involves a carbonator where CO₂ is absorbed by CaO and a calciner where CaCO₃ is heated to release a concentrated CO₂ stream.

WO 2011/078681 A1 teaches a method that allows cost and energy-efficient sustainable recoveryand energy production from any carbon-containing fuel (solid or gas), whether fossil or of bio origin. This method provides efficient CO₂ capture, and allows a highly versatile production of energy in the forms electricity, hydrogen and heat. By "versatility" in this respect it is understood that the ratio of the amounts of these energy forms may be varied within wide limits by simple change of parameters in the process. This publication also makes use of solid oxide fuel cell for energy production, in a process in which CaO is used to capture CO2. CaO is converted to CaCO₃ inthis process and subsequently regenerated in a secondary closed loop process also called calcium looping, further described below.

Lime (CaO) is used to capture CO₂ Calcium carbonate (CaCO₃)/limestone is then formed at a temperature of about 650° C (650° C ± 150° C), the carbonation process (see reaction below). The calcium carbonate (CaCO₃) is transferred to another reactor for sorbent regeneration, the calcination process. In this process step, the calcium carbonate is heated to a temperature in excess of 800° C (800° C-950° C) releasing CO₂ at the same time as the lime sorbent (CaO) isregenerated. The sorbent (CaO) is then transferred to the CO₂ capture reactor.

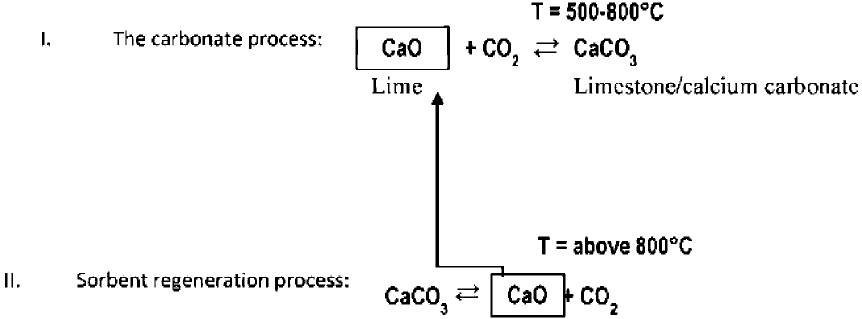

Calcium-looping has a number of advantages compared to closer-to-market CO₂ capture schemes(see Chemical Engineering Research and Design 89 (2011),: Review: The calcium looping cycle for C02 capture from power generation, cement manufacture and hydrogen production, Dean et al.).Post-combustion applications of Ca-looping are applicable in power production from natural gas (CH₄), gasified coal (syn-gas) and in a range of different high temperature industry processes.

However, new technology focused on energy optimization (production of more elpower, with thesame energy input), energy efficient CO₂ capture (by the Ca-looping method) and utilization of waste heat from high temperature industries, such as iron/steel, aluminium, silicon, ferrosilicon, cement, manufacturing and others, is needed.

### Objectives

It is the object of the present invention to further improve the methods of the inventions according to WO 2004/025767 and WO 2011/078681 Al, providing a method even more cost and energy efficient.

### The present invention

The object mentioned above is fulfilled by the present invention as defined by claim 1.

The invention's underlying problem is solved by a method for cost and energy-efficient energy production with CO₂ capture and storage, wherein the method comprises:
i) feeding a natural gas or a syn-gas to a combined cycle gas power facility comprising a gas turbine and a steam turbine, and
ii) feeding a natural gas or a syn-gas to a solid oxide fuel cell (SOFC),
characterized in that
- CO₂ formed in the gas turbine is captured by passing exhaust exiting the gas turbine - which has a CO₂ content of 3 - 5 % and a temperature of approx. 500 ° C - to a fluidized bed reactor containing fine powdered CaO which reacts exothermically with CO₂ to form CaCO₃ and increases the temperature of the remaining exhaust by 160 to 260 ° C,
- passing the remaining exhaust to the steam generator of the combined cycle gas power facility for heat recovery,
- running the SOFC to produce 50 to 70 % heat energy and 30 to 50 % electric energy and passing the heat produced in the SOFC to a calciner containing CaCO₃, causing a decomposition of CaCO₃ to CaO and CO₂,
- passing CO₂ formed in the calciner to a CO₂ storage,
- passing CaCO₃ formed in the fluidized bed reactor to the calciner with CaO formed in the calciner being to the fluidized bed reactor and heat exchanging said CaCO₃ with said CaO, and
- combusting remaining fractions of the natural gas or a syn-gas in an anode exhaust gas in the SOFC with pure oxygen and collecting CO₂ formed in the SOFC and passing it to the CO₂ storage.

Preferred embodiments of the invention are disclosed by the dependent claims.

Accordingly, in a preferred method, the heat recovery takes place in a steam generator, said steam being used for subsequent production of electricity.

As will be seen by a person skilled in the art, the present method maintains the beneficial features of the prior inventions commented above, but involves a combination with other high temperature producing flue gas processes, making the overall process even more cost and energy efficient.

Thus, the exothermic nature of the carbon capture process in which CaO is converted to CaCO₃, is utilized to further increase the temperature of the high temperature flue gas, making this flue gas even more useful for subsequent energy recovery utilizations. Sustainability is still a keyword and common denominator for the overall process.

By "another process" as used herein is understood a process that runs principally independent of the energy production in the SOFC, and typically are conducted for the productions of mechanical goods like iron, steel, cement or the like. As such, the "another process" will typically be a process known per se, but not in the context here presented.

### Detailed description of the invention

Different embodiments of the invention are illustrated below with reference to the to the enclosed drawings, where;
Fig. 1 gives a schematic view of a combined-cycle, gas-fired power plant without a CO₂-capture facility.
Fig. 2 gives a schematic view of the present invention related to power production.
Fig. 3 and 3a, gives a schematic view of the present invention related to exhaust gases from high temperature industries (such as iron/steel, aluminium, silicon, ferrosilicon, other metals, cement, etc.), with total CO₂ capture (not according to this invention).
Fig. 4 gives a schematic view of the present invention related to power production combined with production of hydrogen.
Fig. 5 and 5a, gives a schematic view of the present invention related to exhaust gases from high temperature industries (such as iron/steel, aluminium, silicon, ferrosilicon, other metals, cement, etc.), with total integrated CO₂ capture, combined with production of hydrogen (not according to this invention).
Fig. 6 shows a variant of the embodiment shown in Figure 3, the exhaust gas being provided at a lower temperature (not according to this invention).

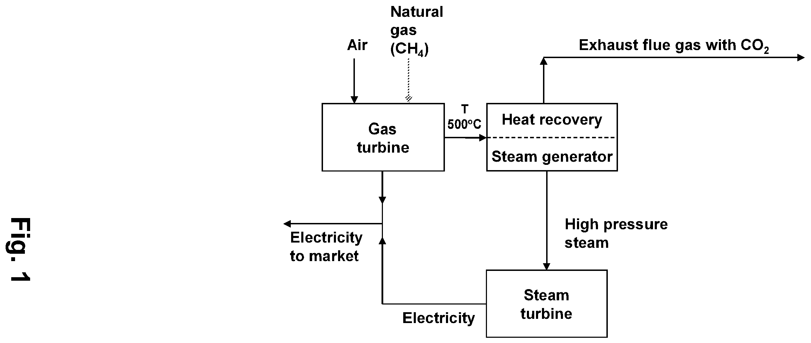

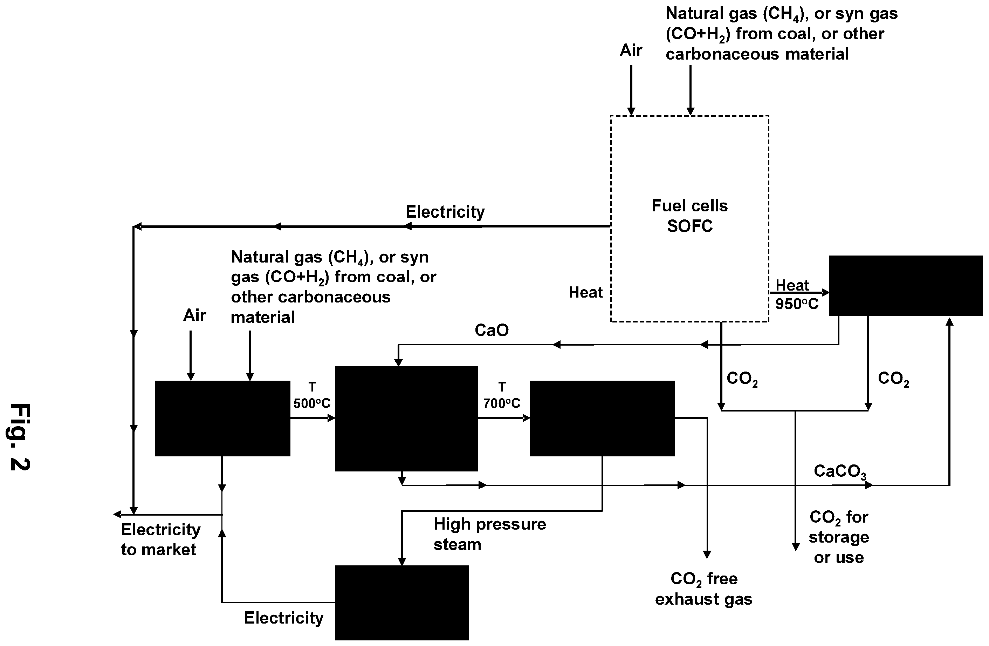

Compared to the simple (general) outline of a combined cycle, gas-fired power plant (fig. 1), figure 2 illustrates a cost- and energy-efficient method for CO₂ capture, combined with production of more power (electricity) from the same fuel input to the combined gas-fired power facility. Figure 2 shows that natural gas (CH₄) or syn-gas and air is fed to the gas turbine, producing power/electricity to the market. The hot exhaust (approx. 500°C with CO₂ (3-5%) is transferred to a reactor (fluidized bed) where fine powdered hot lime (CaO) reacts with the CO₂ to form calcium carbonate. This reaction (CaO+ CO₂ → CaCO₃) is exothermic (with delta H⁰ =+178 kJ/mol, Dean, C. et al., 2011) and results in a temperature increase (500°C → 700°C or more), of the remaining gas (mainly N₂, O₂), and are thus providing additional energy to drive the steam cycle (production of more high pressure steam) by well-known technology. The CO₂ concentration in the flue gas froma NG fired power plant is typically 3-5%, giving a temperature increase of approximately 160°C-260°C. The CO₂ concentration in the flue gas from a pulverized coal fired power plant is typically 10-15%, giving a temperature increase of approximately 480°C-660°C. The CO₂ concentration in the flue gas from an Integrated Gasification Combined Cycle fired power plant is typically 30-32%, giving a temperature increase of more than 1000°C. In the last two cases the CO₂ capture will have to be performed with integrated cooling/ heat exchange or in two or more steps to keep the temperature sufficiently low to enable absorption. The absorption will stop when the temperature increase to the equilibrium temperature for the given CO₂ concentration. The equilibrium for the reaction

CaCO₃ → CaO+ CO₂

is given in Table 1.

**Table 1. Absorption equilibrium temperature and pressure**

| | | |
|---|---|---|
| 550 °C | 0.055 | kPa |
| 587 °C | 0.13 | kPa |
| 605 °C | 0.31 | kPa |
| 680 °C | 1.80 | kPa |
| 777 °C | 5.9 | kPa |
| 748 °C | 9.3 | kPa |
| 777 °C | 14 | kPa |
| 800 °C | 24 | kPa |
| 830 °C | 34 | kPa |
| 852 °C | 51 | kPa |
| R71 °C | 72 | kPa |
| 881 °C | 80 | kPa |
| 891 °C | 91 | kPa |
| 898 °C | 101 | kPa |
| 937 °C | 179 | kPa |
| 1082 °C | 901 | kPa |
| 1241 °C | 3961 | kPa |

The calcium carbonate formed in the CO₂ capture reactor (carbonator) is transferred to the calciner (see fig. 2) for regeneration of the CaO sorbent and release of CO₂ for storage or use, according to the equation;

CaCO₃ → CaO + CO₂.

(The heat exchange to cool hot CaO (to 650 ±150° C) from the Calciner, and to preheat the CaCO₃ before the calcination process is, for simplicity not shown in fig. 2.)

The heat necessary for the calcination is according to the present invention provided by Solid Oxide Fuel cells (SOFC, see fig. 2) instead of for example oxy-combustion of coal (Dean et al., 2011). Natural gas may be used as the primary energy source for the SOFC (see fig. 2). However,other gases, such as syn-gas (used in different embodiments) as suggested in (WO 2011/078681 Al, Raaheim and Vik) are alternative possibilities.

The CO₂ capture from the SOFC is arranged to be performed by combustion of the remaining fraction of fuel in the anode exhaust gas from the fuel cell in pure oxygen. The oxygen can be obtained by the use of an oxygen pump. It is worth noticing that this CO₂ capture method reduces the efficiency by 2-3% compared to a reduction between 5 and 10% by more conventional methods (WO 2011/078681 Al, Raaheim and Vik).

The performance of the SOFC is guided, or arranged, towards maximum production of heat (50-70%) and minimum production of electricity (30-50%). The production of heat from the SOFC would be in accordance with the heat energy required for the Ca-looping process, or the amount of CO₂ in the hot exhaust gas from the gas turbine. The co-produced electricity is delivered to the market, together with electric power produced by the gas and steam turbines (see fig. 2).

There are, however, other high temperature industrial situations (or industries), where it is a major challenge to obtain cost-efficient CO₂ capture.

Important stationary industrial CO₂ point source emitters, with hot exhaust or waste gases, are industries where metal oxides are reduced to metals by carbon as the reducing agent. GHG's are thus not only a penalty for the energy consumption (from fossil fuel) in high temperature industries, such gases are also present in the hot exhaust gases from the oxide to metal reduction itself. It should be noted that these emissions are always present regardless of the type of energy (fossil or renewable).

Important industries with hot exhaust gases where the cement industry represent a special case are as follows;

| | |
|---|---|
| 1 | Iron (and steel) production normally has hot waste gases at 400-500^{°}C. The CO₂ is derived both from the reduction of the oxide ore (Fe₂O₃, Fe₃O₄) and from limestone often used for slag generation (CaCO₃ → CaO+ CO₂ and CaO+ SiO₂ → CaSiO₃ (slag)). |
| 2 | Aluminium is formed at about 900°C. Exhaust carbon anode gases have a high temperature (about 600°C) and accounts for about 50% of total direct CO₂ equivalent emissions from aluminium production, with the remaining GHG's emitted being PFCs, including tetrafluoromethane (CF₄) and hexafluorethane (C₂F₆). These pollutants (PFCs) occur during "anode effects" caused by the depletion of the alumina content of the cell and have in recent years been dramatically reduced by the introduction of automated point feeders to ensure regular and sufficient feed of alumina to each cell in the pot line. |
| 3 | Silicon and ferrosilicon have hot waste gases at about 650°^{°}C. The exhaust gas also contains |
| | some NOₓ and SO₂, with minor CO, CH₄, VOC, N₂O. |
| 4 | The hot exhaust gas(es) from the energy-demanding cement industry is mainly (80%) caused by decarbonation and decarbonation-fuel to release the CO₂ from limestone (CaCO₃ → CaO+ CO₂, occurring at about 900°C), Dean et al. (2011). |

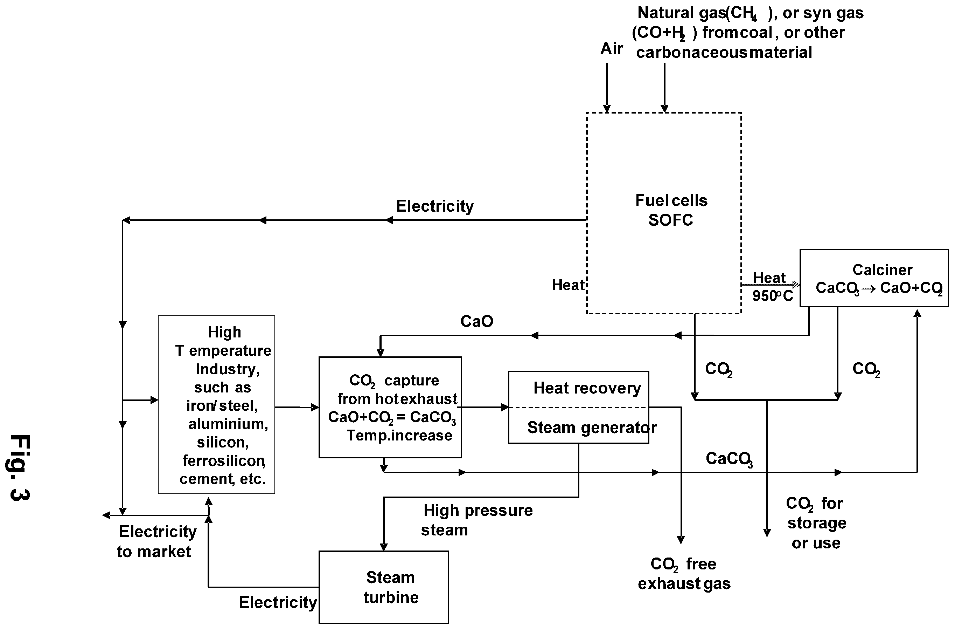

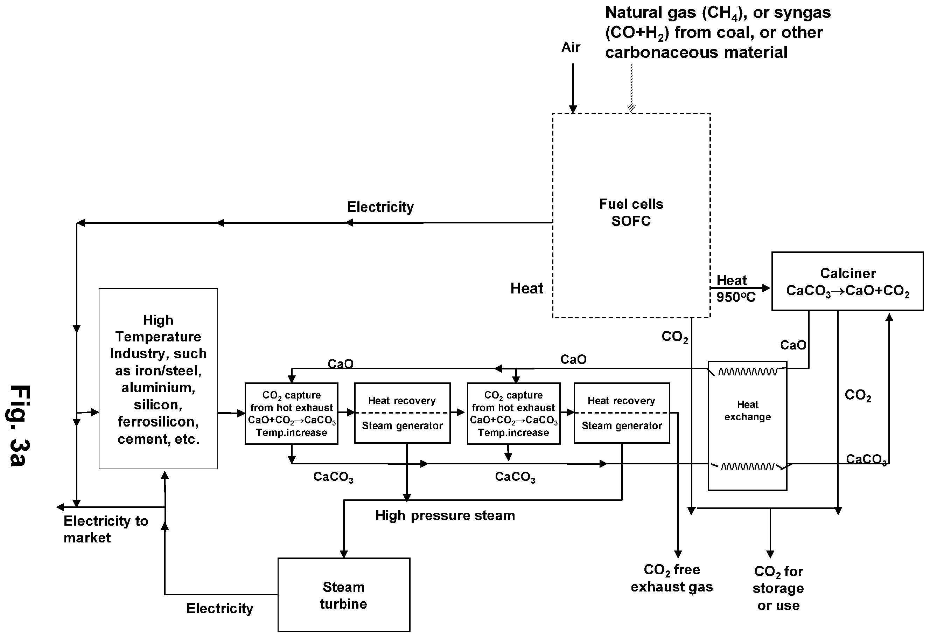

Similarly to the gas turbine case, the hot exhaust gases results in a temperature increase when CaO reacts with CO₂. This, in turn, gives more heat recovery, steam generation and finally power production, as schematically illustrated in figure 3 (not according to this invention). Note that the CO₂ from the power production (electricity from SOFC and steam turbine) and the CO₂ from the metal reduction can both be captured by the same Ca-looping process (see fig. 3) and contributes strongly to a total integrated energy-efficient CO₂-capture.

For some industrial processes the CO₂-concentration in the hot exhaust or flue gas, may- as stated earlier - be too high for efficient CO₂-capture and heat recovery in one step. The CO₂-capture by the Ca-looping method and heat recovery for steam generation may thus be performed in two or more stages, depending on the CO₂-capture efficiency at each stage, as shown in figure 3a.

In order to obtain the highest efficiency for the thermal power generation cycle the carbonation reaction should preferably take place at the highest possible temperature according to table 1. For industrial processes with lower than optimal temperature the temperature can be increased by a heat exchanger.

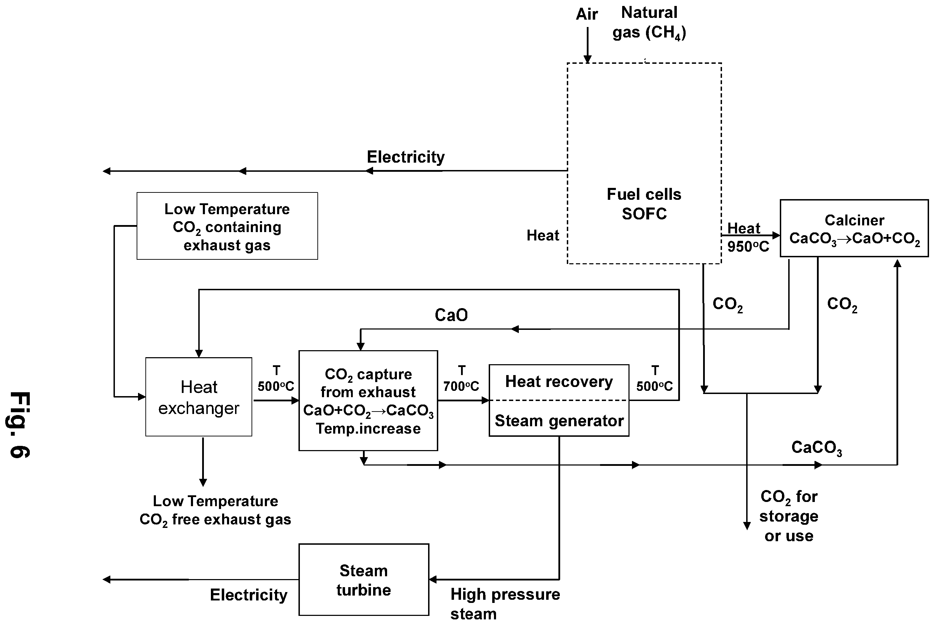

Figure 6 shows how low temperature CO₂ containing exhaust gases can be used (not according to this invention). The exhaust gas is first heated in a heat exchanger to a temperature at which the CO₂ capture process proceeds at an acceptable reaction rate (approximately 500°C) and the resulting temperature increase (500°C → 700°C or more) can be utilized more efficient in a steam cycle for electricity production. After heat recovery the exhaust gas is fed to the heat exchanger to heat the incoming exhaust gas.

The captured CO₂ may be stored in for instance suitable geological formations, which, however, always result in an additional cost penalty. The CO₂ should thus preferably be used for industrial purposes.

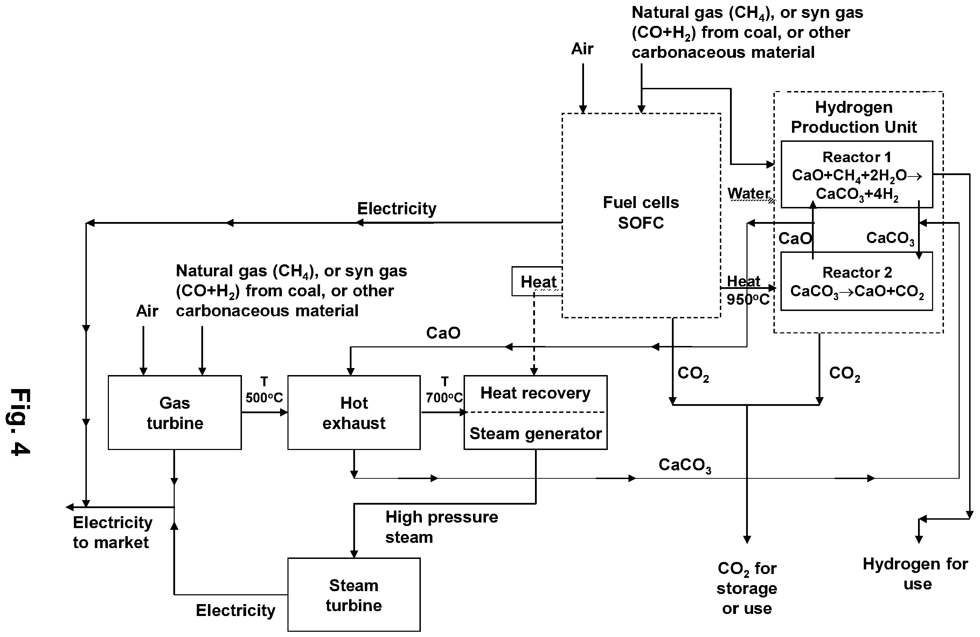

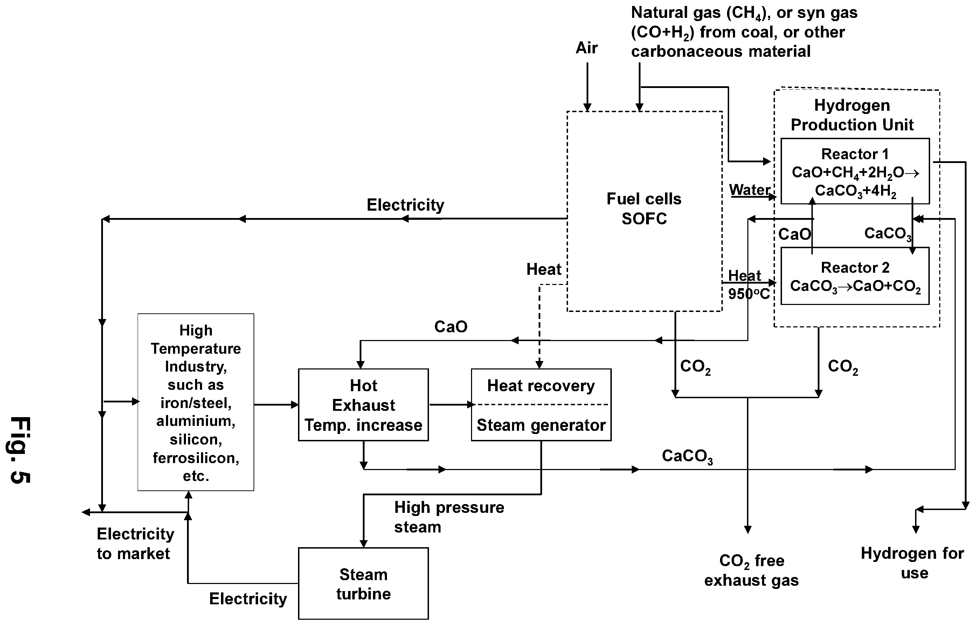

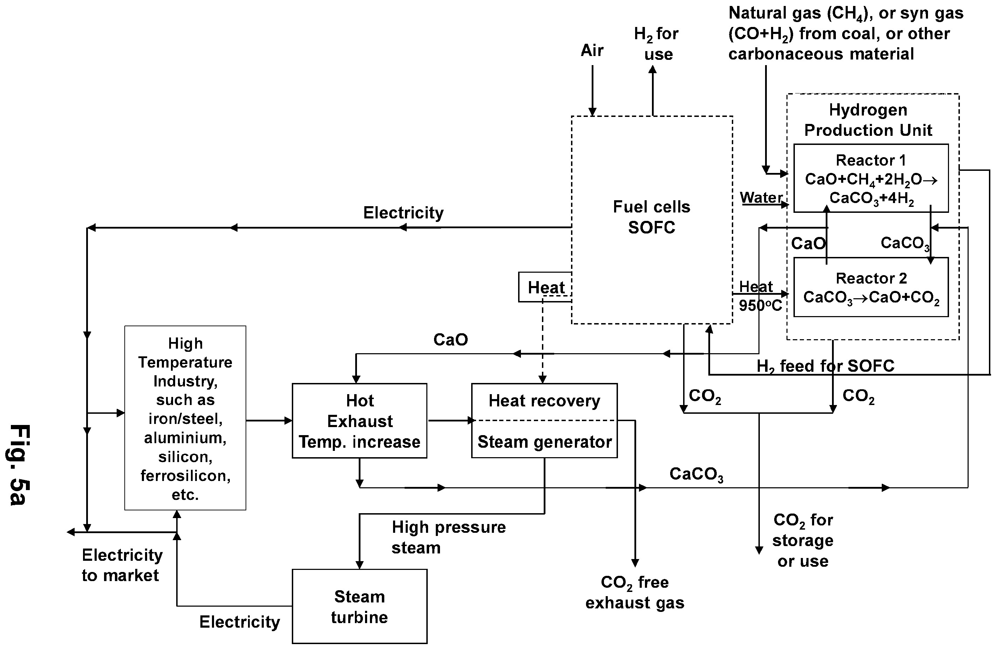

If hydrogen is needed as a reducing agent, for example in the production of special metals (tungsten), or for nearby industries such as, refineries or chemical production plants, it is an optionto combine the Ca-looping with hydrogen production, by adding a hydrocarbon gas (natural gas) or syn-gas formed from any carbonaceous material (together with a catalyst) and water to the carbonate forming process as illustrated in fig. 4, 5 and 5a. The hydrogen is in this case producedby the so-called sorption enhanced steam methane reforming process (SE-SMR), where the Ca- looping also represents an important part of an energy-efficient hydrogen production (Industrial and Engineering Chemistry Research 40 (23) 2001, 5102-5109, Hydrogen production using sorption-enhanced reaction, Ortiz and Harrison; Dean et al. (2011), WO 2004/025767 (Vik et al, (2004) and WO 2011/078681 Al (Raaheim and Vik, 2011).)

The catalyst could be prevented from contamination/degradation by the hot industry flue gases, or power production exhaust gases (f. ex. SO₂ or NOₓ), by size or magnetic separation between reactor 1 and 2 (see fig. 4, 5 and 5a). The total amount of natural gas (or syn-gas) may be reformed to hydrogen and used to feed the SOFC. If hydrogen is needed for other purposes it would be taken out from the SOFC as shown in fig. 5a.

In figures 4, 5 and 5a, it is seen that the Ca-looping process is split in two, where one part of the Ca-looping provides CaO to the hydrogen production and the other part provides CaO for efficient CO₂ capture from the gas turbine power production. It is also seen that the heat for the energy- demanding calcination process (Reactor 2, in figs. 4, 5 and 5a) for both splits are provided by the SOFC.

The high temperature industrial process combined with the SOFC based energy production (not part of the claimed invention) can be any process generating hot CO₂ containing flue gas and is preferably one chosen among processesfor manufacturing of iron, steel, aluminium, silicon, ferrosilicon and cement. Be conducted in a number of ways, one of which is in a steam generator, said steam being used for subsequent production of electricity.

The temperature of the hot gas from another process may be raised by heat exchange when feasible, thus increasing the temperature from a lower temperature to a temperature above 500°C.

The SOFC may be powered by a number of energy rich gases, among which methane containing gases and syn-gas are preferred, resulting in the production of heat, electricity and optionally hydrogen.

## Claims

1. Method for cost and energy-efficient energy production with CO₂ capture and storage, wherein the method comprises:
i) feeding a natural gas or a syn-gas to a combined cycle gas power facility comprising a gas turbine and a steam turbine, and
ii) feeding a natural gas or a syn-gas to a solid oxide fuel cell (SOFC),
**characterized in that**
- CO₂ formed in the gas turbine is captured by passing exhaust exiting the gas turbine - which has a CO₂ content of 3 - 5 % and a temperature of approx. 500 °C - to a fluidized bed reactor containing fine powdered CaO which reacts exothermically with CO₂ to form CaCO₃ and increases the temperature of the remaining exhaust by 160 to 260 °C,
- passing the remaining exhaust to the steam generator of the combined cycle gas power facility for heat recovery,
- running the SOFC to produce 50 to 70 % heat energy and 30 to 50 % electric energy and passing the heat produced in the SOFC to a calciner containing CaCO₃, causing a decomposition of CaCO₃ to CaO and CO₂,
- passing CO₂ formed in the calciner to a CO₂ storage,
- passing CaCO₃ formed in the fluidized bed reactor to the calciner with CaO formed in the calciner being transferred to the fluidized bed reactor and heat exchanging said CaCO₃ with said CaO, and
- combusting remaining fractions of the natural gas or a syn-gas in an anode exhaust gas in the SOFC with pure oxygen and collecting CO₂ formed in the SOFC and passing it to the CO₂ storage.

2. Method as claimed in claim 1 wherein the heat recovery takes place in a steam generator, said steam being used for subsequent production of electricity.

3. Method as claimed in claim 2 wherein said steam is high pressure steam.

4. Method as claimed in any one of the preceding claims, wherein the energy produced by the SOFC is heat, electricity and optionally hydrogen.

## Patentansprüche

1. Verfahren zur kosten- und energieeffizienten Energieproduktion mit CO₂-Erfassung und -Speicherung, wobei das Verfahren Folgendes umfasst:
i) Zuführen eines Erdgases oder eines Synthesegases zu einer Gaskraftanlage mit kombiniertem Zyklus, das eine Gasturbine und eine Dampfturbine umfasst, und
ii) Zuführen eines Erdgases oder eines Synthesegases zu einer Festoxidbrennstoffzelle (SOFC), **dadurch gekennzeichnet, dass**
- CO₂, das in der Gasturbine gebildet wird, erfasst wird, indem Abgas, das die Gasturbine verlässt - das einen CO₂-Gehalt von 3-5 % und eine Temperatur von ca. 500 °C aufweist - zu einem Wirbelschichtreaktor geleitet wird, der feines pulverförmiges CaO enthält, das exotherm mit CO₂ reagiert, um CaCO₃ zu bilden, und die Temperatur des übrigen Abgases um 160 bis 260 °C erhöht,
- Leiten des übrigen Abgases zu dem Dampfgenerator der Gaskraftanlage mit kombiniertem Zyklus zur Wärmerückgewinnung,
- Betreiben der SOFC, um 50 bis 70 % Wärmeenergie und 30 bis 50 % elektrische Energie zu produzieren und Leiten der Wärme, die in der SOFC produziert wird, zu einem Kalzinator, der CaCO₃ enthält, wodurch eine Zersetzung von CaCO₃ zu CaO und CO₂ bewirkt wird,
- Leiten von CO₂, das in dem Kalzinator gebildet wird, zu einem CO₂-Speicher,
- Leiten von CaCO₃, das in dem Wirbelschichtreaktor gebildet wird, zu dem Kalzinator, wobei CaO, das in dem Kalzinator gebildet wird, zu dem Wirbelschichtreaktor übertragen und das CaCO₃ mit dem CaO wärmegetauscht wird, und
- Verbrennen von übrigen Anteilen des Erdgases oder eines Synthesegases in einem Anodenabgas in der SOFC mit reinem Sauerstoff und Sammeln von CO₂, das in der SOFC gebildet wird, und Leiten zu dem CO₂-Speicher.

2. Verfahren nach Anspruch 1, wobei die Wärmerückgewinnung in einem Dampferzeuger stattfindet, wobei der Dampf zur anschließenden Produktion von Elektrizität verwendet wird.

3. Verfahren nach Anspruch 2, wobei der Dampf Hochdruckdampf ist.

4. Verfahren nach einem der vorhergehenden Ansprüche, wobei die Energie, die durch die SOFC produziert wird, Wärme, Elektrizität und optional Wasserstoff ist.

## Revendications

1. Procédé permettant la production d'énergie rentable et écoénergétique en énergie comprenant la capture et le stockage de CO₂, ledit procédé comprenant :
i) l'alimentation en gaz naturel ou en gaz de synthèse d'une installation énergétique à gaz à cycle combiné comprenant une turbine à gaz et une turbine à vapeur, et
ii) l' alimentation en gaz naturel ou en gaz de synthèse d'une pile à combustible à oxyde solide (SOFC), **caractérisé en ce que**
- le CO₂ formé dans la turbine à gaz est capturé par passage des gaz d'échappement sortant de la turbine à gaz - qui possèdent une teneur en CO₂ de 3 à 5 % et une température d'environ 500°C - dans un réacteur à lit fluidisé contenant du CaO en poudre fine qui réagit exothermiquement avec le CO₂ pour former du CaCO₃ et augmente la température des gaz d'échappement restants de 160 à 260°C,
- le passage des gaz d'échappement restants au générateur de vapeur de l'installation énergétique à gaz à cycle combiné en vue de la récupération de chaleur,
- le fonctionnement de la SOFC pour produire 50 à 70 % d'énergie thermique et 30 à 50 % d'énergie électrique et le passage de la chaleur produite dans le SOFC dans un calcinateur contenant du CaCO₃, entraînant une décomposition du CaCO₃ en CaO et CO₂,
- le passage du CO₂ formé dans le calcinateur dans un dispositif de stockage de CO₂,
- le passage du CaCO₃ formé dans le réacteur à lit fluidisé dans le calcinateur, le CaO formé dans le calcinateur étant transféré vers le réacteur à lit fluidisé et l'échange de chaleur dudit CaCO₃ avec ledit CaO, et
- la combustion des fractions restantes du gaz naturel ou d'un gaz de synthèse dans un gaz d'échappement d'anode dans la SOFC avec de l'oxygène pur et la collecte du CO₂ formé dans la SOFC et son passage dans le dispositif de stockage de CO₂.

2. Procédé selon la revendication 1, ladite récupération de chaleur ayant lieu dans un générateur de vapeur, ladite vapeur étant utilisée pour la production ultérieure d'électricité.

3. Procédé selon la revendication 2, ladite vapeur étant de la vapeur haute pression.

4. Procédé selon l'une quelconque des revendications précédentes, ladite énergie produite par la SOFC étant de la chaleur, de l'électricité et éventuellement de l'hydrogène.
